# DEMANDE DE BREVET EUROPEEN

(11) **EP 1 867 258 A2**
(43) Date de publication de la demande: **19.12.2007**
(21) Numéro de dépôt: 07356079.9
(22) Date de dépôt: 13.06.2007
(51) Int. Cl.: A47J 31/40

(54) **Distributeur de produit pulverulent a reservoir amovible**

(30) Priorité: 15.06.2006 FR 0605346
(71) Demandeur: SEB SA, 69130 Ecully (FR)
(72) Inventeur: Morin Gilles, 14210 Sainte Honorine du Fay (FR); Mih, Séverine, 53100 Mayenne (FR)
(74) Mandataire: Kiehl, Hubert

(57) **Abrégé**

Distributeur de produit pulvérulent comportant un boîtier, un réservoir (2) monté amovible dans un logement réalisé dans le boîtier, contenant le produit pulvérulent et ayant un orifice de distribution (3), ainsi qu'un dispositif obturateur (5) de cet orifice comportant au moins un volet (7) porté par le réservoir (2) et monté mobile entre une position de fermeture de l'orifice de distribution (3) et une position d'ouverture de cet orifice.
Selon l'invention, la mise en place par translation verticale du réservoir (2) dans le logement du boîtier déclenche le déplacement du volet (7) de sa position de fermeture à sa position d'ouverture.

## Description

La présente invention est relative à un dispositif distributeur de produit pulvérulent comprenant un réservoir amovible pour un produit alimentaire pulvérulent d'infusion ou de percolation, tels le café moulu, le thé, le chocolat, etc. et susceptible d'être utilisé avec un appareil de préparation et de distribution de boissons.

Un appareil de préparation et de distribution de boissons chaudes, par exemple à partir de café moulu, comprend généralement un réservoir d'eau froide, une pompe électrique, une chaudière et une tête d'infusion apte à recevoir une certaine quantité de café moulu en vue de lui injecter une quantité prédéterminée d'eau chaude en provenance de la chaudière, la boisson obtenue étant ensuite orientée vers un récipient collecteur. En fin de cycle d'infusion, la tête d'infusion doit être ouverte afin de pouvoir y introduire une nouvelle dose de café moulu après avoir évacué le reste de produit précédemment infusé. Le café moulu est acheminé dans la chambre d'infusion à partir d'un distributeur de produit pulvérulent. Ces appareils nécessitent un remplissage régulier du réservoir du distributeur, manoeuvre qui sollicite du temps et beaucoup d'attention de la part de l'utilisateur, surtout lorsque l'accès au réservoir se fait dans un petit espace.

Pour pallier ces inconvénients, certains appareils disposent de réservoirs amovibles. Le document US 2 138 204 décrit un tel appareil, notamment un moulin à café avec un réservoir de grains amovible. Le réservoir de grains présente, en sa partie inférieure, une ouverture de distribution pouvant être obturée par une plaque coulissante. La plaque est maintenue en position par un ressort et peut coulisser, entre ses positions ouverte et fermée, en étant actionnée depuis l'extérieur de la machine, par un levier de commande. Un tel appareil présente l'inconvénient d'imposer à l'utilisateur un actionnement manuel.

Une solution améliorée a été décrite dans le document US 6 626 085 portant sur un broyeur pour grains de café disposant de deux réservoirs amovibles munis chacun d'un dispositif de fermeture automatique de son orifice de distribution. Notamment, l'orifice de distribution du réservoir est fermé automatiquement par une trappe coulissante poussée par un ressort de rappel, l'ouverture se faisant lorsque l'utilisateur appuie sur un bouton de commande d'un solénoïde qui pousse la même plaque coulissante en sa position d'ouverture, à l'encontre de son ressort de rappel. Ce broyeur dispose, certes, d'un dispositif de fermeture automatique de l'orifice de distribution de grains de café en direction d'une chambre de broyage, mais l'ouverture est commandée par l'utilisateur.

Une solution similaire a été décrite dans le document WO2004/098361 où l'ouverture ou la fermeture d'une porte glissante obturant un orifice du réservoir amovible est commandée par un solénoïde ou par des aimants. Toutefois, la mise en place du réservoir se fait par coulissement horizontal, ce qui implique la présence des rails de guidage sur une grande longueur à l'intérieur de la machine, tout en rendant la manipulation de tels réservoirs de forme allongée et poignée latérale difficile et peu aisée pour l'utilisateur.

Une autre solution a été décrite dans le document FR 2 713 906 portant sur un distributeur de mouture pour une machine à café automatique comportant un réservoir de mouture positionné de manière amovible dans un siège correspondant réalisé dans le boîtier de la machine. Le réservoir de mouture comporte des pales de dosage entraînées en rotation par un moteur électrique du boîtier, l'ouverture de distribution étant obturée par l'arrêt en position déterminée des pales de dosage ayant des dimensions correspondant à celles de l'ouverture de distribution qu'elle bordent. Fonctionnant à satisfaction, cette solution s'avère toutefois d'une construction assez complexe.

Le document DE 203 00 928 U1 décrit une autre solution de réservoir à grains de café amovible pour une machine à café comportant un orifice central fermé par deux volets de forme arquée entraînés en rotation l'un par rapport à l'autre lorsque l'on fait tourner le réservoir autour de son axe vertical à l'intérieur de la machine. Toutefois, cette solution présente l'inconvénient de ne pouvoir être utilisée qu'avec des grains de café de dimension supérieure à celle de l'orifice existant entre les deux volets lorsqu'ils se trouvent dans leur position de fermeture. Par ailleurs, elle s'avère non seulement de construction complexe, mais également d'utilisation compliquée pour l'utilisateur qui doit alors faire tourner lui-même le réservoir, en y allant par plusieurs phases de rotation, correspondant chacune à une fonction spécifique : mise en place du réservoir, puis plusieurs possibilités d'ouverture de volets, puis fermeture en faisant tourner dans l'autres sens, etc..

Le but de l'invention est de remédier aux inconvénients précités et de proposer un distributeur de produit pulvérulent à réservoir amovible qui permet à l'utilisateur d'installer facilement le réservoir par rapport au distributeur et de le retirer en toute sécurité et ceci de manière aisée et intuitive, pour une solution constructive simplifiée et fiable en fonctionnement.

Un autre but de l'invention est un distributeur de produit pulvérulent à réservoir amovible comportant un orifice de distribution apte à être ouvert et fermé automatiquement.

Un autre but de l'invention est un distributeur de produit pulvérulent à réservoir amovible comportant un système automatique de fermeture de son orifice de distribution de construction simplifiée, facile à industrialiser pour des coûts moindres, tout en étant fiable en fonctionnement.

Ces buts sont atteints avec un distributeur de produit pulvérulent comportant un boîtier, un réservoir monté amovible dans un logement réalisé dans le boîtier, contenant le produit pulvérulent et ayant un orifice de distribution, ainsi qu'un dispositif obturateur de cet orifice comportant au moins un volet porté par le réservoir et monté mobile entre une position de fermeture de l'orifice de distribution et une position d'ouverture de cet orifice, du fait que la mise en place par translation verticale du réservoir dans le logement du boîtier déclenche le déplacement du volet de sa position de fermeture à sa position d'ouverture.

Un tel distributeur de produit pulvérulent est de préférence utilisé avec une machine à préparer des boissons, le produit pulvérulent pouvant être du café en grains ou moulu, du thé, du chocolat, etc.. Le distributeur comporte un réservoir de produit pulvérulent muni d'un orifice de distribution et d'un dispositif obturateur de cet orifice, le réservoir permettant, grâce à son amovibilité, de passer facilement d'un type de produit pulvérulent à un autre, par simple changement de réservoir. Le réservoir étant amovible, l'orifice de distribution ou de sortie du réservoir est maintenu fermé lorsque le réservoir se trouve à l'extérieur du distributeur, permettant ainsi d'éviter les risques d'écoulement de produit pulvérulent lors du retrait et de la manipulation du réservoir contenant le produit.

Selon l'invention, le dispositif obturateur de l'orifice de distribution coopère avec des moyens d'actionnement permettant à un volet de fermeture de l'orifice du distributeur de passer automatiquement d'une position fermée, lorsque le réservoir est hors du boîtier, à une position ouverte, lorsque le réservoir se trouve positionné dans son logement au sein du distributeur. Plus particulièrement selon l'invention, l'ouverture de l'orifice de distribution se produit automatiquement en même temps que la mise en place du réservoir par translation verticale dans son logement prévu à cet effet dans le boîtier du distributeur, boîtier qui peut être, par exemple, relié à celui appartenant à une machine de préparation de boissons. Ainsi, la mise en place du réservoir dans son logement par un mouvement vertical linéaire vers le bas déplace automatiquement le volet de sa position de fermeture à une position d'ouverture ce qui fait que, à la fin de sa course de descente à l'intérieur de son logement, le réservoir se trouve déjà en position de fonctionnement.

La mise en place du réservoir à l'intérieur de son logement se fait avantageusement par une translation verticale vers le bas, ceci nécessitant déjà un effort moindre de la part de l'utilisateur, le réservoir prenant sa place naturellement, par simple descente dans le logement sous l'effet de son poids.

Ainsi, l'utilisateur, n'a qu'à positionner correctement le réservoir par rapport à l'ouverture supérieure de son logement à l'intérieur du boîtier de la machine, puis le laisser simplement glisser verticalement à l'intérieur de ce logement, où il prend place sous l'effet de son propre poids. Il n' y a donc plus l'obligation pour l'utilisateur de devoir manipuler le réservoir ou ses composants après la fin de sa course de descente dans le logement de la machine, ni de devoir commander par un levier ou bouton de commande l'ouverture de l'orifice de distribution du réservoir, celle-ci étant garantie par la simple mise en position par translation verticale du réservoir dans son logement. Ceci simplifie nettement la construction du distributeur et de son réservoir et surtout l'opération de mise en place et de retrait du réservoir par rapport à la machine, opération qui s'avère alors être très intuitive. De surcroît, on évite ainsi tout risque de manipulation ou de fausse manoeuvre de la part de l'utilisateur, notamment un éventuel oubli d'actionnement de l'ouverture qui pourrait alors provoquer des dysfonctionnements du distributeur ou de la machine le comportant.

Avantageusement, le volet est actionné vers sa position de fermeture par un ressort de rappel lorsque le réservoir est retiré du logement.

Cette solution permet de fermer automatiquement l'orifice de sortie de produit du réservoir lors de son retrait du logement et de maintenir fermé le réservoir contenant le produit pulvérulent lors de son transport ou stockage à l'extérieur du distributeur, tout en étant simple à mettre en oeuvre.

De préférence, le logement du boîtier comporte une came coopérant avec la périphérie du volet.

On aurait pu, certes, envisager une solution de détection à distance de la mise en place correcte du réservoir dans son logement, par exemple en utilisant un capteur optique et un circuit électronique de réception du signal du capteur pour actionner un mécanisme d'entraînement du volet. On préfère toutefois cette solution utilisant des moyens mécaniques car ils sont simples à mettre en oeuvre, moins coûteux que les précédents, tout en étant fiables en fonctionnement.

Avantageusement, le volet comprend une nervure s'engageant dans une fente pratiquée dans une paroi du logement.

Ceci permet un actionnement direct du volet lors de l'installation du réservoir dans son logement, ainsi qu'une mise en place aisée du réservoir dans son logement, la fente pratiquée dans une paroi de celui-ci étant à la fois facilement repérable depuis la partie supérieure du logement et pouvant, de plus, présenter en cette même partie supérieure, un chanfrein d'introduction de la nervure du volet.

Avantageusement, la mise en place par translation du réservoir dans le logement du boîtier déclenche le déplacement en rotation du volet.

On aurait pu, certes, envisager l'utilisation d'un dispositif d'obturation à volet coulissant mis en translation par la came du logement. On préfère toutefois une construction à volet pivotant, car elle est plus compacte et plus facile à mettre en oeuvre.

De préférence, le volet est monté rotatif au fond du réservoir, en étant amené à tourner autour de l'axe longitudinal de ce dernier.

Un tel volet monté au fond du réservoir permet d'évacuer entièrement son contenu. De surcroît, un tel volet tournant autour de l'axe longitudinal du réservoir, peut avantageusement être utilisé avec un réservoir de forme générale cylindrique.

Avantageusement, l'orifice de distribution est une fenêtre pratiquée dans une paroi latérale cylindrique du réservoir et se prolongeant sur une paroi de fond du réservoir.

Un tel orifice de distribution pratiqué en la partie inférieure d'une paroi latérale du réservoir et se prolongeant sur la paroi du fond du réservoir permet de distribuer un grand volume de produit pour un faible déplacement du volet, notamment un faible angle de rotation du volet.

De préférence, le volet pivote à l'extérieur du réservoir et comporte un ergot de guidage dans une rainure du réservoir.

Le pivotement du volet à l'extérieur du réservoir assure une très bonne fermeture de l'orifice de distribution pour un montage facilité du volet par rapport au réservoir.

Avantageusement, le volet est réalisé de manière à assurer une fermeture étanche à l'air du réservoir.

Les parois du volet ont une forme et des dimensions correspondant à celles de l'orifice de distribution et le volet est monté par rapport au réservoir avec un très faible jeu, de manière à assurer une fermeture étanche à l'air du réservoir et empêcher ainsi l'oxydation du produit contenu dans le réservoir et sa conservation à l'extérieur du distributeur.

De préférence, le réservoir comporte des moyens d'indexation en position par rapport au logement du boîtier.

Ceci facilite la mise en place par l'utilisateur du réservoir dans son logement et garantit en même temps le positionnement correct du réservoir, condition nécessaire au bon fonctionnement du dispositif obturateur du volet.

Dans une variante de réalisation de l'invention, le réservoir contient de la mouture de café et le distributeur comporte des moyens de dosage permettant de délivrer des quantités définies de café moulu.

Dans une autre variante de réalisation de l'invention, le réservoir contient des grains de café et la machine à café comporte des moyens permettant le broyage desdits grains et la délivrance de la mouture.

Le distributeur à réservoir amovible de l'invention peut donc être employé avec des réservoirs contenant de la mouture ou des grains de café, indifféremment, donc avec différentes catégories de machines.

Le distributeur à réservoir amovible de l'invention trouve avantageusement son application dans une machine automatique de préparation des boissons. Une telle machine automatique comporte des moyens de fourniture d'une quantité prédéterminée de fluide à l'intérieur d'une chambre d'infusion recevant le produit pulvérulent délivré par le distributeur de l'invention, ainsi que des moyens permettant l'évacuation du produit d'infusion à l'extérieur de la chambre d'infusion en direction d'un récipient collecteur. Le distributeur à réservoir amovible de l'invention permet de fermer et d'ouvrir l'orifice de sortie de produit pulvérulent sans intervention de l'utilisateur, d'éviter les risques de salissure lors du retrait du réservoir, de mieux préserver le goût et l'arôme du produit lors du stockage à l'extérieur de la machine, tout en permettant à la machine de produire plusieurs types de boissons à partir de réservoirs amovibles interchangeables.

L'invention sera mieux comprise à l'étude d'un exemple de réalisation pris à titre nullement limitatif et illustré dans les figures annexées dans lesquelles :
- la figure 1a est une vue éclatée d'un réservoir amovible du distributeur de l'invention et la figure 1b est une vue en perspective d'un ensemble formant boîtier du distributeur;
- la figure 2 est une vue en perspective d'un réservoir amovible du distributeur de l'invention, l'orifice de distribution étant fermé;
- la figure 3 est une vue similaire à celle de la figure 2, mais où l'orifice de distribution est ouvert;
- la figure 4 est une vue de dessus du distributeur monté dans le boîtier de la figure 1 b, le réservoir étant enlevé pour plus de clarté.

Le distributeur de produit pulvérulent sera décrit dans ce qui suit dans le cadre d'une machine à café automatique, le produit pulvérulent distribué étant alors du café moulu. Une machine à café intégrant un distributeur de produit pulvérulent selon l'invention comporte les éléments connus rencontrés sur cette catégorie de machines et peut incorporer les spécificités décrites dans le document WO 9912457 pour ce qui concerne le dispositif de tassage de la mouture de café dans la chambre d'infusion et pour l'éjection des galettes de marc. Une telle machine est notamment apte à assurer la température adéquate de l'eau amenée dans la chambre d'infusion et capable de réaliser le compactage de la mouture à l'intérieur de la chambre d'infusion. Le café obtenu après l'infusion du café moulu dans la chambre est évacué à l'extérieur de la machine dans un récipient collecteur, tel que par exemple décrit dans le document WO 9912456.

Le distributeur de produit pulvérulent décrit comporte par ailleurs des moyens de dosage, notamment un moyeu entraînant en rotation des pales de dosage permettant de délivrer des quantités définies de café moulu, ces moyens comportant des éléments connus et pouvant incorporer les spécificités décrites dans le document FR 2 713 906.

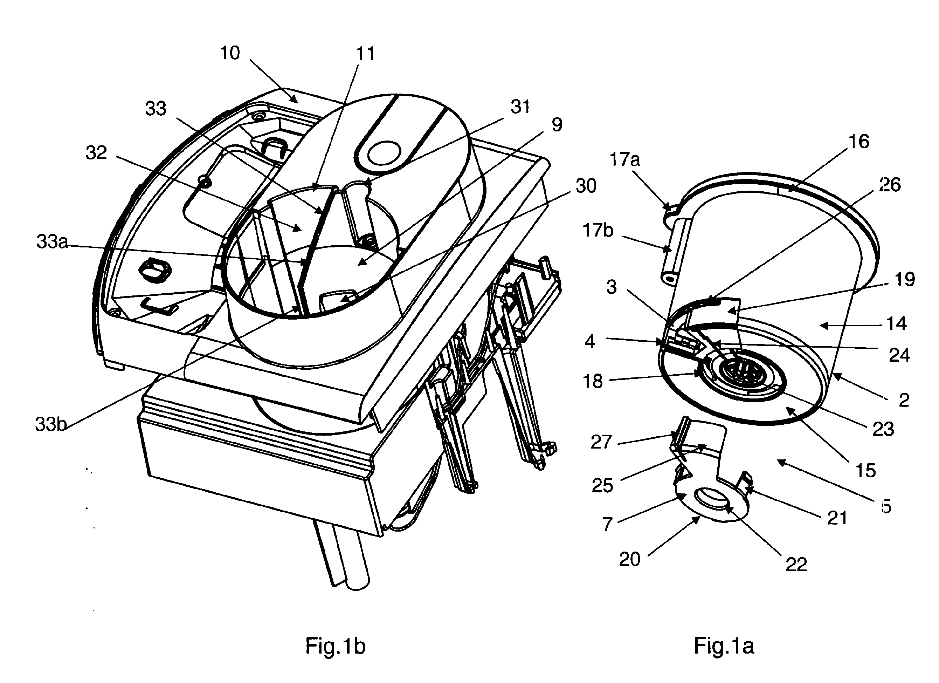

En référence aux figures 1a et 1b, le distributeur de café moulu comporte un réservoir 2 de forme générale cylindrique comportant un orifice de distribution 3 en sa partie inférieure et un dispositif d'obturation 5 de cet orifice moyennant un volet 7.

Le réservoir 2 comporte une paroi latérale 14 de forme générale cylindrique, une paroi de fond 15 et un rebord supérieur 16 apte à recevoir un couvercle amovible (non représenté). Une protubérance 17a est formée sur un côté du rebord supérieur 16 et se prolonge vers le bas par une protubérance semi-cylindrique 17b sur un côté du réservoir 2, la protubérance 17b formant moyen d'indexation du réservoir 2 lorsqu'il est mis en place dans un logement prévu à cet effet dans la machine à café, tel qu'il sera décrit par la suite. Pour faciliter le montage des divers composants du réservoir, la paroi de fond 15 est réalisée en une pièce à part emboîtée sur la paroi latérale 14 et présente un orifice central 18.

L'orifice de distribution 3 est pratiqué sur un côté du réservoir 2, et se présente sous la forme d'une fenêtre d'angle 4 qui a une forme rectangulaire en la partie inférieure de la paroi latérale 14 et qui se prolonge par une ouverture en forme de secteur de cercle d'un angle d'environ 30° sur la paroi de fond 15. L'orifice de distribution 3 se prolonge latéralement sur un côté par un découpage 19, de même largeur que celle de l'orifice de distribution 3, en étant pratiqué sur une faible épaisseur dans la surface externe du réservoir 2 et permettant de loger le volet 7, tel qu'il sera expliqué par la suite. Une rainure 26 borde la partie supérieure du découpage 19, en étant parallèle à la paroi de fond 15, et se prolonge au-dessus de l'orifice de distribution 3.

Le volet 7 présente une base 20 de forme générale circulaire de diamètre extérieur correspondant à celui de l'orifice central 18. Le volet 7 est fixé à la paroi de fond 15 du réservoir 2 au moyen de pattes de montage 21, les logements des pattes de montage 21 dans la paroi de fond 15 permettant la rotation du volet 7 autour de l'axe vertical du réservoir 2 passant par le centre de l'orifice 18. Une ouverture 22 au centre de la base 20 du volet permet le passage d'un arbre d'entraînement en rotation (non représenté), depuis le boîtier de la machine, d'un moyeu 23 portant des pales de dosage (non représentées) à l'intérieur du distributeur 1. La base 20 du volet se prolonge radialement sur un côté par une trappe d'angle 25 ayant une même forme, mais des dimensions légèrement supérieures à celles de la fenêtre d'angle 4 du réservoir 2 qu'elle recouvre. La paroi latérale verticale de la trappe d'angle 25 présente une nervure 27 protubérante verticale, d'épaisseur constante sur toute la hauteur de cette paroi latérale de la trappe.

Le volet 7 est monté mobile élastiquement par rapport au réservoir 2, au moyen d'un ressort de rappel de torsion 24 (fig. 1a), le ressort étant situé entre la paroi de fond 15 et la base 20 du volet 7. Plus particulièrement, le ressort de rappel 24 a une forme générale de boucle concentrique au centre de l'orifice 18, l'une de ses extrémités étant fixée à la paroi de fond 15 et l'autre extrémité étant fixée à la base 20 du volet 7. En position de repos, le ressort de rappel 24 assure le maintien en position fermée du volet 7 par rapport à l'orifice de distribution 3, la fenêtre d'angle 4 étant fermée de manière étanche par la trappe d'angle 25.

Le réservoir 2 est monté amovible dans un logement 9 d'un boîtier 10 du distributeur de la machine à café, lequel boîtier est supporté par la partie supérieure du châssis de la machine. En figure 1b, on aperçoit une ouverture de sortie 30 située au fond du logement 9 communiquant, via une goulotte, avec la chambre d'infusion (non représentée) et permettant, après la mise en place du réservoir 2 dans le logement 9, l'écoulement du café moulu en direction de la chambre d'infusion de la machine. Le logement 9 présente, sur un côté, une encoche 31 de réception de la protubérance 17b du réservoir 2 permettant un positionnement correct et rapide de celui-ci par rapport au logement 9 et empêchant la rotation du réservoir par rapport au logement 9.

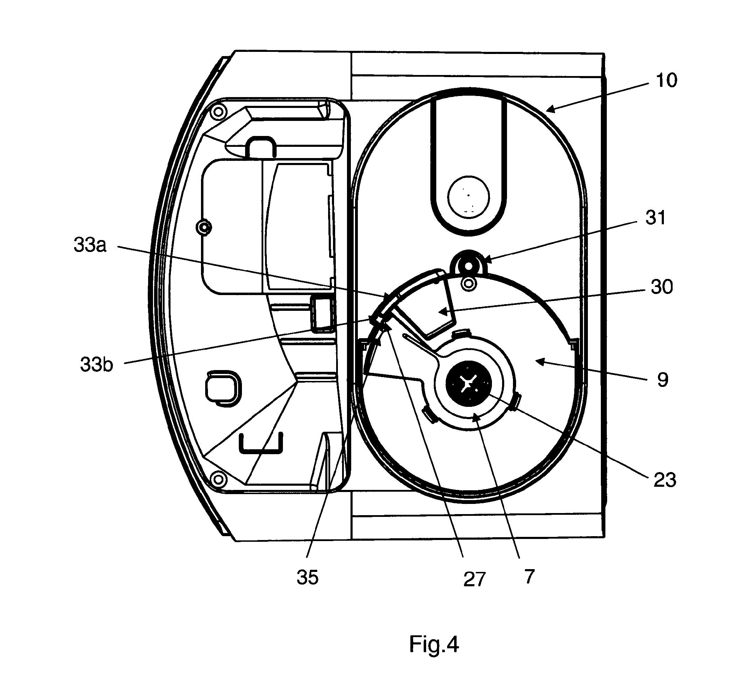

Selon l'invention, la mise en place par translation verticale du réservoir 2 dans son logement 9 déclenche le mouvement de rotation du volet 7 autour de l'axe longitudinal ou vertical du réservoir. Plus particulièrement, le logement 9 comporte une came 32 coopérant avec la périphérie du volet 7 lorsque le réservoir est inséré dans le logement 9 du boîtier 10. Plus particulièrement, une cavité ou fente 33 est pratiquée dans la paroi interne latérale 11 du logement 9 et présente une première partie oblique 33a prolongée vers le fond du logement par une partie verticale 33b, les parties oblique 33a et verticale 33b formant surfaces de came. La fente 33 est positionnée par rapport à l'encoche 31 de manière à venir en contact avec la nervure 27 du volet 7 du réservoir 2 lorsque ce dernier est positionné dans son logement 9, le volet 7 étant en position de fermeture. Pendant l'introduction du réservoir 2 dans le logement 9, la nervure 27 du volet 7 vient en appui sur la fente 33 formant rampe de came qui pousse le volet 7 en pivotement contre la force du ressort de rappel 24 lors de la descente verticale du réservoir 2 dans le logement 9. Le volet est guidé en pivotement par un ergot 35 (fig. 4) interne coulissant dans la rainure 26 du réservoir 2, le ressort de rappel 24 maintenant la nervure 27 au contact des flancs de la fente 33.

La figure 4 montre une vue de dessus du boîtier 10 du distributeur monté dans le boîtier d'une machine à café, le réservoir étant enlevé pour plus de clarté. Lorsque le réservoir du distributeur est en position dans son logement 9 au sein de la machine à café, la nervure 27 du volet 7 se trouve au niveau de la partie verticale de la fente 33, et la fenêtre d'angle 25 du volet 7 est décalée en pivotement jusqu'à recouvrir le découpage 19 du réservoir laissant complètement libre l'orifice de distribution 3 situé en vis-à-vis de l'ouverture de sortie 30 et permettant ainsi l'écoulement de café en direction de la chambre d'infusion.

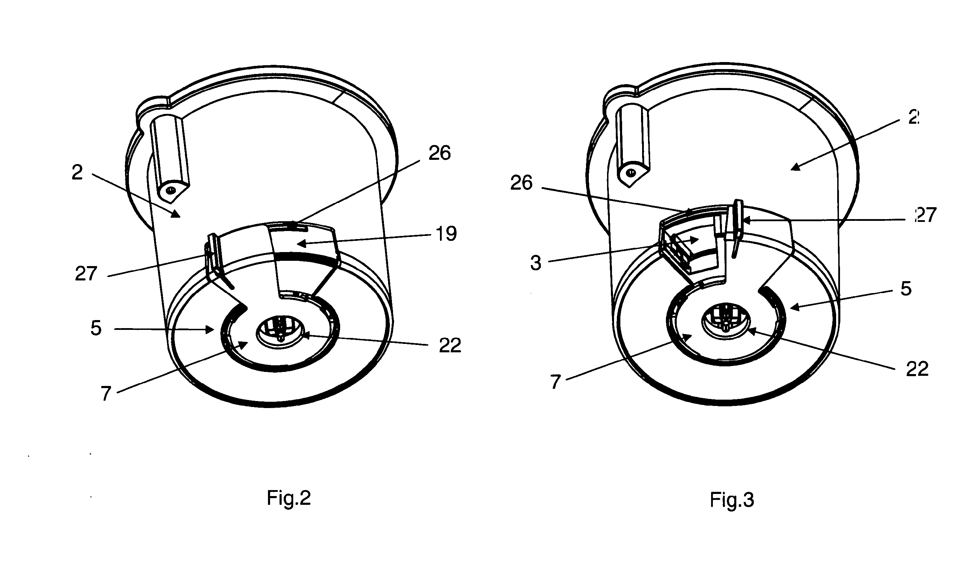

Les figures 2 et 3 montrent le réservoir 2 dans les deux positions extrêmes de fonctionnement du dispositif obturateur 5 du distributeur de l'invention. Ainsi, la figure 2 représente le réservoir 2 lorsqu'il est retiré de la machine, le volet 7 ayant complètement fermé l'orifice de distribution, laissant le découpage 19 complètement découvert. Le réservoir 2 est ainsi prêt pour le transport ou pour le stockage. La figure 3 montre le réservoir 2 en sa position de fonctionnement au sein de la machine à café. On observe, à l'inverse de la figure 2, que le volet 7 s'est décalé vers la droite, en se superposant au découpage 19 de la figure 2 pour ouvrir complétement l'orifice de distribution 3.

En fonctionnement, l'utilisateur commence par choisir le type de mouture souhaitée, puis il remplit de mouture le réservoir 2 et le positionne ensuite dans le logement 9 du boîtier 10 du distributeur. Lors de l'introduction du réservoir 2 dans le logement 9, la nervure 27 du volet 7 venant en contact avec la fente 33 de la came 32, permet de décaler le volet qui ouvre l'orifice de distribution 3 pour le faire communiquer avec l'ouverture de sortie 30 au fond du logement 9. A ce moment, la machine étant prête à fonctionner, l'utilisateur peut commander un cycle d'infusion. La commande du cycle d'infusion met en mouvement les pales de dosage du distributeur qui envoie par l'orifice de distribution 3 une dose de café moulu à l'intérieur de la chambre d'infusion. Un piston de tassage comprime la mouture et une quantité prédéterminée d'eau chaude est envoyée depuis une chaudière dans la chambre d'infusion, et la boisson obtenue par passage à travers la mouture est collectée à l'extérieur de la machine. Ce cycle d'infusion terminé, l'utilisateur peut retirer le réservoir amovible 2 de la machine, le ressort de rappel 24 du volet 7 fermant alors automatiquement l'orifice de distribution 3.

D'autres variantes et modes de réalisation de l'invention peuvent être envisagés sans sortir du cadre de ses revendications.

Ainsi, on peut utiliser tout autre type de volet mobile associé à des réservoirs de formes diverses, tels un volet coulissant sur une paroi plane d'un réservoir parallélépipédique, ou sur une paroi de fond du réservoir, etc.

De la même manière, on pourrait remplacer la came d'actionnement du volet par un mécanisme, par exemple, à bras articulés aptes à accrocher une partie du volet et à le déplacer lors de l'introduction du réservoir sur la machine.

## Revendications

1. Distributeur de produit pulvérulent comportant un boîtier (10), un réservoir (2) monté amovible dans un logement (9) réalisé dans le boîtier (10), contenant le produit pulvérulent et ayant un orifice de distribution (3), ainsi qu'un dispositif obturateur (5) de cet orifice comportant au moins un volet (7) porté par le réservoir (2) et monté mobile entre une position de fermeture de l'orifice de distribution (3) et une position d'ouverture de cet orifice, **caractérisé en ce que** la mise en place par translation verticale du réservoir (2) dans le logement (9) du boîtier (10) déclenche le déplacement du volet (7) de sa position de fermeture à sa position d'ouverture.

2. Distributeur selon la revendication 1, **caractérisé en ce que** le volet (7) est actionné vers sa position de fermeture par un ressort de rappel (24) lorsque le réservoir (2) est retiré du logement (9).

3. Distributeur selon l'une des revendications 1 ou 2, **caractérisé en ce que** le logement (9) du boîtier (10) comporte une came (32) coopérant avec la périphérie du volet (7).

4. Distributeur selon la revendication 3, **caractérisé en ce que** le volet (7) comprend une nervure (27) s'engageant dans une fente (33) pratiquée dans une paroi (11) du logement (9).

5. Distributeur selon l'une des revendications précédentes, **caractérisé en ce que** la mise en place par translation du réservoir (2) dans le logement (9) du boîtier (10) déclenche le déplacement en rotation du volet (7).

6. Distributeur selon la revendication 5, **caractérisé en ce que** le volet (7) est monté rotatif au fond du réservoir (2), en étant amené à tourner autour de l'axe longitudinal de ce dernier.

7. Distributeur selon la revendication 6, **caractérisé en ce que** l'orifice de distribution (3) est une fenêtre pratiquée dans une paroi latérale (14) cylindrique du réservoir (2) et se prolongeant sur une paroi de fond (15) du réservoir.

8. Distributeur selon l'une des revendications 6 ou 7, **caractérisé en ce que** le volet (7) pivote à l'extérieur du réservoir (2) et comporte un ergot (35) de guidage dans une rainure (26) du réservoir.

9. Distributeur selon l'une des revendications précédentes, **caractérisé en ce que** le volet (7) est réalisé de manière à assurer une fermeture étanche à l'air du réservoir (2).

10. Distributeur selon l'une des revendications précédentes, **caractérisé en ce que** le réservoir (2) comporte des moyens d'indexation en position par rapport au logement (9) du boîtier (10).

11. Distributeur selon l'une des revendications précédentes, **caractérisé en ce que** le réservoir (2) contient de la mouture de café et le distributeur comporte des moyens de dosage permettant de délivrer des quantités définies de café moulu.

12. Machine automatique de préparation des boissons **caractérisée en ce qu'**elle comporte un distributeur de produit pulvérulent selon l'une des revendications précédentes.
